# EUROPÄISCHE PATENTSCHRIFT

(11) **EP 3 278 651 B1**
(45) Veröffentlichungstag und Bekanntmachung des Hinweises auf die Patenterteilung: **18.11.2026**
(21) Anmeldenummer: 16001730.7
(22) Anmeldetag: 04.08.2016
(51) Int. Cl.: A01D 34/90, A01D 34/73, A01B 59/06

(54) **VORRICHTUNG ZUR BEFESTIGUNG EINES WERKZEUGS AUF EINER ABTRIEBSWELLE EINES MOTORISCH ANGETRIEBENEN ARBEITSGERÄTES**
DEVICE FOR FIXING A TOOL ON A DRIVE SHAFT OF A MOTOR DRIVEN TOOL
DISPOSITIF DE FIXATION D'UN OUTIL SUR UN ARBRE DE TRAVAIL D'UN APPAREIL DE TRAVAIL MOTORISE

(43) Veröffentlichungstag der Anmeldung: 07.02.2018
(73) Patentinhaber: Andreas Stihl AG & Co. KG, 71336 Waiblingen (DE)
(72) Erfinder: Rethaber, Achim, 70736 Fellbach (DE)
(74) Vertreter: Wasmuth, Rolf

(56) Entgegenhaltungen:
- EP-A1- 2 311 306
- WO-A1-2012/095029
- JP-A- H11 196 649
- US-A- 6 032 369
- US-A1- 2007 006 562

## Beschreibung

Die Erfindung betrifft eine Vorrichtung zur Befestigung eines Werkzeugs auf einer Abtriebswelle eines motorisch angetriebenen Arbeitsgerätes nach dem Oberbegriff des Anspruchs 1.

Eine Vorrichtung zum Befestigen eines Werkzeuges an einem Werkzeugkopf ist aus der US 6,032,369 A bekannt. Der Auflageteller weist eine Nabe auf, die eine zentrale Öffnung des Werkzeugs durchragt. Der Auflageteller und das Werkzeug werden von der Abtriebswelle eines Getriebes durchragt, wobei auf der Abtriebswelle eine Druckscheibe, ein Laufteller und ein Spannmittel angeordnet sind. Das Spannmittel ist als Spannmutter ausgebildet, welche auf einen Gewindeabschnitt des Endes der Abtriebswelle aufgeschraubt wird. Die Spannmutter wirkt auf einen Befestigungsrand des Lauftellers, der sich auf der Druckscheibe abstützt. Die Druckscheibe liegt an dem auf dem Auflageteller angeordneten Werkzeug an.

Aus der JP H11 196649 A ist ein Freischneider mit Befestigung eines Lauftellers bekannt. Ferner umfasst die Befestigung einen Auflageteller und eine Druckscheibe, zwischen welchen ein Werkzeug geklemmt gehalten ist. Die Klemmkraft wird mittels einer Mutter aufgebracht. Die Mutter ist gegen einen Laufteller gespannt, welcher wiederum an der Druckscheibe anliegt, so dass die Klemmkraft auf das Werkzeug übertragen wird.

In der WO 2012/095029 A1 ist ein Freischneider gezeigt. Der Werkzeugkopf des Freischneiders umfasst zwei sich entgegendrehende Werkzeuge. Über eine Mutter ist ein Laufteller auf dem Werkzeugkopf angeordnet, wobei der Laufteller zur Abtriebswelle drehbar angeordnet ist. Laufteller und Mutter stehen in direktem Kontakt zueinander.

Aus der EP 2 311 306 A1 ist ein Freischneider mit einem Werkzeug bekannt, welches über eine Druckscheibe gegen einen Auflageteller verspannt ist. Die Druckscheibe ist drehfest auf der Abtriebswelle angeordnet.

Beim Anziehen der Spannmutter wird die Spannkraft über den Befestigungsrand des Lauftellers auf die Druckscheibe übertragen, wobei der Befestigungsrand zwischen der Spannmutter und der Druckscheibe geklemmt gehalten ist. Berührt beim Arbeiten mit dem Werkzeugkopf der Laufteller den Untergrund, so ergibt sich ein auf den Laufteller wirkendes Bremsmoment. Da die Spannmutter unmittelbar auf dem Befestigungsrand des Lauftellers aufliegt, wirkt ein Drehmoment auf die Spannmutter, welches zu deren Lockerung auf dem Gewinde der Abtriebswelle führen kann. Das Drehmoment kann auch zu einem übermäßig starken Anziehen des Spannmittels führen, was ein Lösen der Anordnung erschwert und/oder eine Überlastung der Anordnung bewirken kann.

Um dieser Lockerung der Spannmutter oder einer Überbelastung der Anordnung entgegenzuwirken, kann vorgesehen sein, bei rechtsdrehenden Antriebswellen ein Linksgewinde und bei linksdrehenden Antriebswellen ein Rechtsgewinde vorzusehen. Insbesondere bei Arbeitsgeräten, die während des Betriebes in unterschiedlichen Drehrichtungen betrieben werden können, kann dadurch lediglich eine Sicherung in einer Drehrichtung erfolgen.

Der Erfindung liegt die Aufgabe zugrunde, eine Vorrichtung zur Befestigung eines Werkzeugs an einer drehenden Abtriebswelle anzugeben, die unabhängig von der Drehrichtung der Abtriebswelle bei Kontakt des Lauftellers mit dem Untergrund eine Lockerung des Spannmittels verhindert.

Die Aufgabe wird erfindungsgemäß nach den kennzeichnenden Merkmalen des Anspruchs 1 gelöst.

Das auf der Abtriebswelle montierte Spannmittel, vorzugsweise eine Spannmutter oder eine Spannschraube, übt über das Spannelement eine Spannkraft auf das Werkzeug aus. Nach der Erfindung ist das Spannelement als Verbindungsnabe ausgebildet. Der Laufteller ist auf der Verbindungsnabe gehalten, wobei vorgesehen ist, dass der Laufteller ohne Vorsehen einer Spannkraft gegenüber der Verbindungsnabe drehbar ist und/oder in endmontierter Stellung - nach Überwindung einer Reibkraft - relativ zur Verbindungsnabe drehbar ist. In der endmontierten Stellung wird auf das Werkzeug durch Anziehen des Spannmittels eine Spannkraft aufgebracht, die das Werkzeug fixiert.

Die Verbindungsnabe ist von der Abtriebswelle durchragt und derart gestaltet, dass die Verbindungsnabe auf der Abtriebswelle drehfest gehalten ist. Dabei ist vorgesehen, dass das Spannmittel, vorzugsweise eine Spannmutter, zum Aufbringen einer Spannkraft auf eine Auflagefläche der Verbindungsnabe wirkt.

In Weiterbildung der Erfindung wirkt die Verbindungsnabe auf eine Druckscheibe, die zur Anlage an dem Werkzeug ausgebildet ist. Die Druckscheibe wird - wie auch der Auflageteller, die Verbindungsnabe und der Laufteller - von der Antriebswelle durchragt. Die Form und Abmessungen des Auflagetellers können zweckmäßig gewählt sein, insbesondere ist die radiale Ausdehnung des Auflagetellers größer, insbesondere mehrfach größer als seine Ausdehnung in axialer Richtung. Der Auflageteller ist insbesondere rund, wobei der Durchmesser des Auflagetellers mehrfach größer ist als seine Dicke.

Der Laufteller weist eine insbesondere zentrale Montageöffnung mit einem Befestigungsrand auf, wobei die als Spannelement vorgesehene Verbindungsnabe die Montageöffnung des Lauftellers durchragt. Es kann zweckmäßig sein, wenn der Laufteller mit axialem Spiel an der Verbindungsnabe gehalten ist.

In Weiterbildung der Erfindung ist der Befestigungsrand der Montageöffnung des Lauftellers axial zwischen einem Ende der Verbindungsnabe und der Druckscheibe angeordnet.

Eine vorteilhafte Ausführungsform ist gegeben, wenn an der Verbindungsnabe eine Verliersicherung ausgebildet ist, durch die der Laufteller verliersicher auf der Verbindungsnabe gehalten ist. Zweckmäßig kann auch die Druckscheibe verliersicher an der Verbindungsnabe angeordnet sein.

In einer bevorzugten Ausführungsform der Erfindung sind der Laufteller und die Druckscheibe gemeinsam auf der Verbindungsnabe gehalten. Vorteilhaft ist vorgesehen, die Verbindungsnabe, den Laufteller und die Druckscheibe als eine gemeinsame, zusammenhängende Baugruppe auszubilden, die als Einheit gehändelt werden kann.

Zum Festspannen eines Werkzeugs auf einem Auflageteller eines Werkzeugkopfes ist die als Einheit zu händelnde Baugruppe lediglich auf der Abtriebswelle aufzufädeln und dann das Spannmittel, vorzugsweise eine Spannmutter, auf das Ende der Antriebswelle aufzuschrauben. Eine Fehlmontage der einzelnen Komponenten in falscher Orientierung und/oder Reihenfolge sowie ein Verlust einzelner Komponenten sind dadurch weitgehend verhindert.

In vorteilhafter Weiterbildung der Erfindung ist vorgesehen, dass die Verbindungsnabe eine Verdickung aufweist. Die Verdickung kann insbesondere durch einen Bund, einen Absatz oder einen Sicherungsring gebildet sein. Eine Verdickung kann jedes die radiale Ausdehnung der Verbindungsnabe veränderndes Element sein. Die Verdickung kann zweckmäßig eine Auflagefläche für das Spannmittel bilden. In besonderer Weiterbildung der Erfindung ist die Verdickung nicht nur als Auflagefläche für das Spannmittel vorgesehen, sondern bildet zugleich einen Teil einer Verliersicherung und/oder kann darüber hinaus als eine Kraftübertragungsfläche genutzt werden. Über die Kraftübertragungsfläche kann die aufgebrachte Spannkraft auf die Druckscheibe weitergeleitet werden. Die Verdickung wird multifunktional genutzt. Die Verdickung kann insbesondere an einem Ende der Verbindungnabe angeordnet sein. Die Verdickung kann auch von einem Bauteil der Vorrichtung gebildet sein, so z.B. durch eine einteilige Anformung der Druckscheibe an die Verbindungsnabe.

Die Längsmittelachse der Verbindungsnabe liegt gleichachsig zur Drehachse der Antriebswelle, wobei - bezogen auf den Auflageteller - die Verbindungsnabe ein proximales Ende und ein distales Ende aufweist. Das proximale Ende der Verbindungsnabe weist einen Abstand zum Auflageteller auf. Der Abstand zum Auflageteller ist so bemessen, dass auch bei festgespanntem Werkzeug das proximale Ende einen Restabstand zum Auflageteller besitzt.

In Weiterbildung der Erfindung können die Druckscheibe und die Verbindungsnabe zueinander drehfest angeordnet sein; dadurch wird erreicht, dass das von der Antriebswelle über die Verbindungsnabe auf die Druckscheibe aufgebrachte Drehmoment einerseits über den Reibschluss zwischen der Druckscheibe und dem Werkzeug und andererseits über den Reibschluss zwischen dem Auflageteller und dem Werkzeug übertragen wird.

Es kann zweckmäßig sein, die Druckscheibe und die Verbindungsnabe einteilig miteinander auszubilden.

Die Verbindungsnabe durchragt die Montageöffnung des Lauftellers mit einem Axialabschnitt, wobei der Axialabschnitt eine vorgegebene Länge aufweist. Die Länge des Axialabschnittes ist derart bemessen, dass sie mindestens der Höhe des Befestigungsrandes des Lauftellers und maximal der Höhe des Befestigungsrandes des Lauftellers summiert mit der axialen Höhe der Druckscheibe entspricht. Die axiale Höhe der Druckscheibe kann im gespannten und im ungespannten Zustand der Vorrichtung bemessen sein.

Ein selbstständiger Gedanke der Erfindung ist die Gestaltung einer Baugruppe aus einer Verbindungsnabe, einem Laufteller und einer Druckscheibe zur Verwendung in einer Vorrichtung zur Befestigung eines Werkzeugs an einer drehend angetriebenen Abtriebswelle. Dabei ist die Baugruppe durch die Verbindungsnabe, den Laufteller und die Druckscheibe gebildet. Diese Baugruppe kann als gemeinsame, zusammenhängende Einheit gehändelt werden, so dass bei der Montage und Demontage eines Werkzeugs lediglich das Spannmittel und die Baugruppe als zwei voneinander getrennte Teile montiert oder demontiert werden müssen. Es kann zweckmäßig sein, das Spannmittel, insbesondere eine Spannmutter in die Baugruppe zu integrieren und/oder an der Baugruppe verliersicher zu halten.

Die Baugruppe weist eine zentrale Öffnung auf, wobei zur Montage des Werkzeugs die Baugruppe über die Öffnung lediglich auf die Antriebswelle aufzufädeln ist. Die Verbindungsnabe greift über Drehmitnehmer formschlüssig an der Antriebswelle an, während der Laufteller drehbar auf der Verbindungsnabe gehalten ist. Bei Kontakt mit dem Untergrund kann somit der Laufteller relativ zur Verbindungsnabe drehen. Im gespannten Zustand kann der Laufteller dann frei drehen, wenn ein eventuell bestehender Reibschluss zwischen der Verbindungsnabe und dem Befestigungsrand des Lauftellers überwunden wird.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind.

Die zu den einzelnen Ausführungsbeispielen genannten Details, Merkmale und Vorteile können auf andere Ausführungsbeispiele übertragen werden und sind nicht auf das jeweils genannte Ausführungsbeispiel beschränkt, zu dem es beschrieben ist.

Die Zeichnungen zeigen:
- Fig. 1: im Schnitt einen als Getriebekopf ausgebildeten Werkzeugkopf an einem Ende einer Antriebswelle,
- Fig. 2: in vergrößerter Darstellung den Schnitt durch den Werkzeugkopf nach Fig. 1 mit einer Vorrichtung zum Befestigen eines Werkzeugs an der Abtriebswelle des Werkzeugkopfes,
- Fig. 3: eine Draufsicht auf die Befestigungsvorrichtung in Richtung der Pfeile III-III in Fig. 2,
- Fig. 4: einen Schnitt durch die Vorrichtung zum Befestigen eines Werkzeugs längs der Linie IV-IV in Fig. 3,
- Fig. 5: in vergrößerter Darstellung ein Detail V aus Fig. 4,
- Fig. 6: eine Ansicht auf die Vorrichtung gemäß Pfeil VI in Fig. 4,
- Fig. 7: in schematischer Explosionsdarstellung die eine Baugruppe bildenden Elemente einer Vorrichtung zum Befestigen eines Werkzeugs,
- Fig. 8: einen Schnitt durch ein weiteres Ausführungsbeispiel der Vorrichtung in einer Darstellung gemäß Fig. 4,
- Fig. 9: einen Schnitt durch ein drittes Ausführungsbeispiel der Vorrichtung in einer Darstellung gemäß Fig. 8,
- Fig. 10: einen Schnitt durch ein viertes Ausführungsbeispiel der Vorrichtung gemäß einer Darstellung gemäß Fig. 8,
- Fig. 11: eine Draufsicht auf die Vorrichtung gemäß Pfeil XI in Fig. 9,
- Fig. 12: ein fünftes Ausführungsbeispiel der Vorrichtung in einer Darstellung gemäß Fig. 8,
- Fig. 13: ein sechstes Ausführungsbeispiel einer Vorrichtung in einer Darstellung gemäß Fig. 8,
- Fig. 14: ein siebtes Ausführungsbeispiel der Vorrichtung in einer Darstellung gemäß Fig. 8,
- Fig. 15: eine Draufsicht auf einen Auflageteller für ein Werkzeug,
- Fig. 16: einen Schnitt längs der Linie XVI-XVI in Fig. 15,
- Fig. 17: in vergrößerter Darstellung das in Fig. 16 gezeigte Detail XVII.

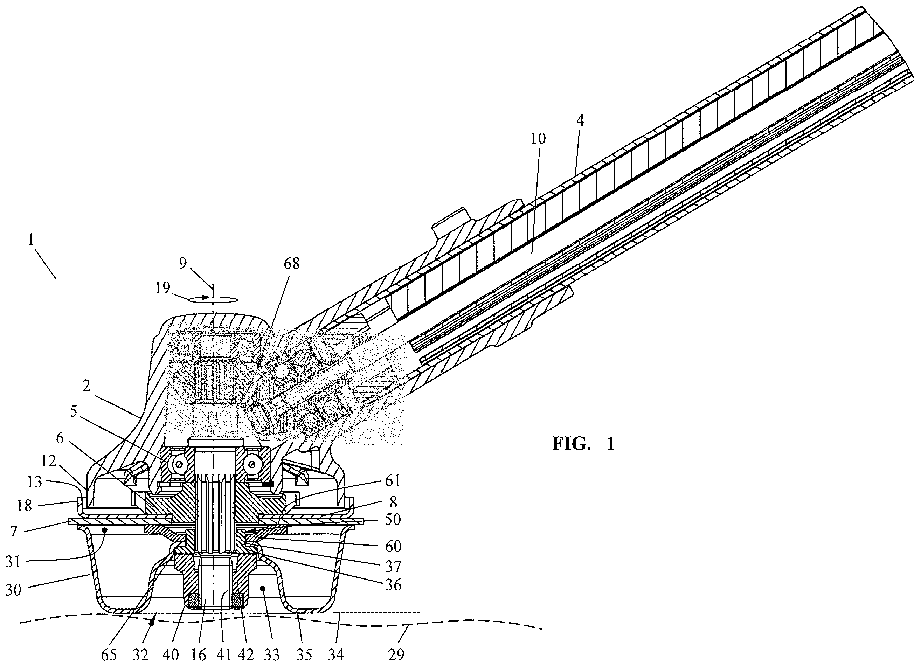

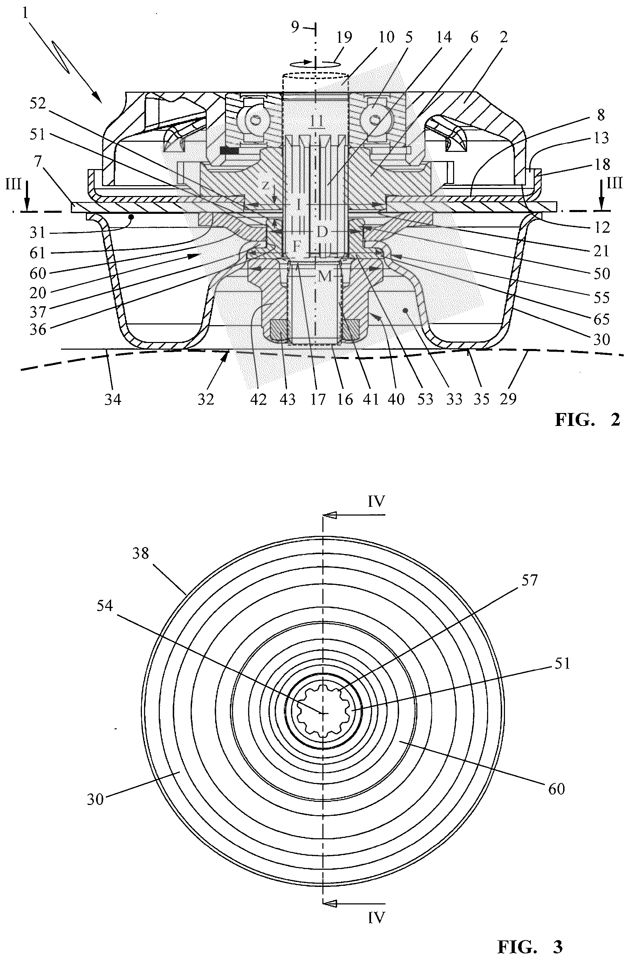

Der im Schnitt in den Fig. 1 und 2 dargestellte Werkzeugkopf 1 besteht aus einem Grundkörper 2, welcher insbesondere an einem Ende 3 eines Schutzrohres 4 einer nicht näher dargestellten Antriebseinheit gehalten ist. Das in Fig. 1 teilweise dargestellte Arbeitsgerät kann eine Motorsense, ein Hochentaster oder dgl. Arbeitsgerät sein. Im Schutzrohr 4 ist eine drehend angetriebene Antriebswelle 10 aufgenommen, die vorteilhaft über ein Getriebe 68 eine Abtriebswelle 11 in dem Werkzeugkopf 1 antreibt.

In anderer Ausführung kann es zweckmäßig sein, ein Werkzeug 7 unmittelbar auf dem Ende der Antriebswelle 10 anzuordnen. Die Begriffe Antriebswelle 10 und Abtriebswelle 11 sind im Rahmen der Erfindung untereinander austauschbar.

Im gezeigten Ausführungsbeispiel ist die von der Antriebswelle 10 angetriebene Abtriebswelle 11 im Grundkörper 2 des Werkzeugkopfes 1 durch Lager 5 drehbar gelagert, wobei die Lager 5 vorteilhaft als Wälzlager ausgebildet sein können. Die Abtriebswelle 11 kann auch von dem Ende der Antriebswelle 10 gebildet sein. Im gezeigten Ausführungsbeispiel ist die Abtriebswelle 11 die Ausgangswelle des Getriebes 68, dessen Eingangswelle durch die Antriebswelle 10 gebildet ist.

Auf die Abtriebswelle 11 ist ein Auflageteller 6 für das Werkzeug 7 aufgeschoben. Die Form und die Abmessungen des Auflagetellers 6 können zweckmäßig gewählt sein, insbesondere ist die radiale Ausdehnung des Auflagetellers 6 größer, insbesondere mehrfach größer als seine Ausdehnung in axialer Richtung. Der im Ausführungsbeispiel gezeigte Auflageteller 6 ist rund, wobei der Durchmesser des Auflagetellers 6 mehrfach größer ist als seine Dicke. Der Auflageteller 6 trägt eine Abdeckscheibe 8, die den Grundkörper 2 des Werkzeugkopfes 1 auf der Werkzeugseite verschließt. Die Abdeckscheibe 8 ist relativ zum stehenden Grundkörper 2 um die Drehachse 9 der Abtriebswelle 11 drehbar. Zweckmäßig überlappt ein umgebördelter Rand 18 der Abdeckscheibe 8 den äußeren Rand 12 des Grundkörpers 2. Zwischen dem Rand 12 des Grundkörpers 2 und dem Rand 18 der Abdeckscheibe 8 ist ein Drehspalt 13 ausgebildet.

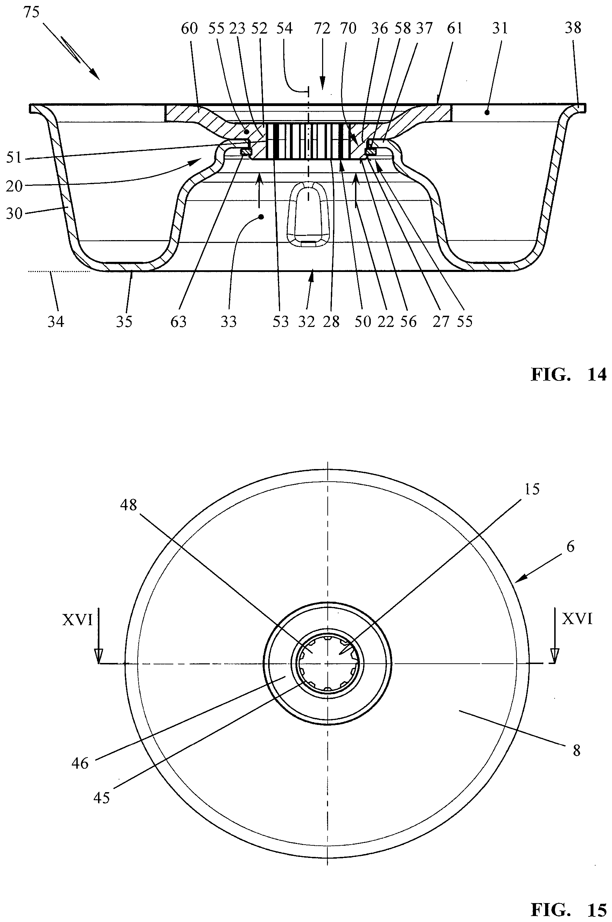

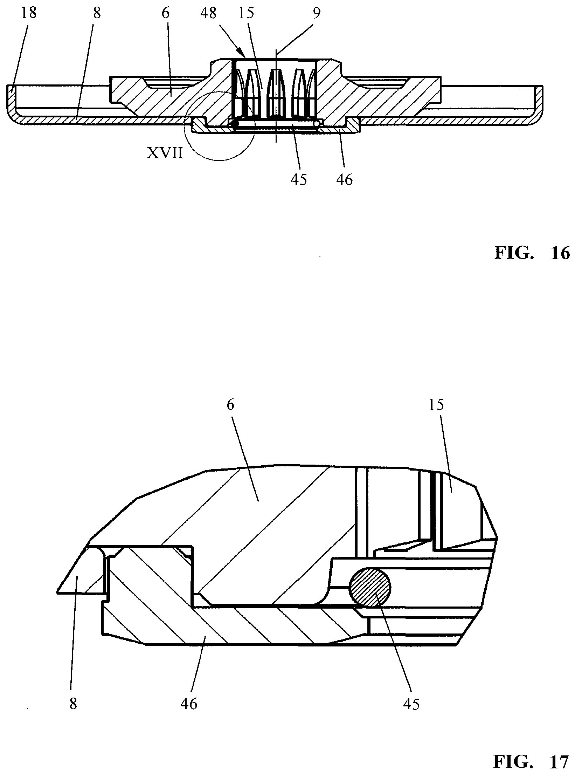

Im gezeigten Ausführungsbeispiel ist der Auflageteller 6 in Antriebsrichtung 19 drehfest mit der Abtriebswelle 10 verbunden. Hierzu weist die Abtriebswelle 11 Längsrippen 14 auf, die in entsprechende Keilnuten 15 (Figuren 15, 16) des Auflagetellers 6 eingreifen. Der Auflageteller 6 ist drehfest auf der Abtriebswelle 11 gehalten. Der Auflageteller 6 ist in Umfangsrichtung der Abtriebswelle 11 formschlüssig mit der Abtriebswelle 11 verbunden.

Der Werkzeugkopf 1 trägt einen Laufteller 30, der - wie die Schnittdarstellungen in den Figuren 1, 2 und 4 zeigen - als offener Topf, insbesondere als Ringtopf gestaltet ist. Der Laufteller 30 weist eine Topföffnung 31 auf, die dem Auflageteller 6 und/oder dem Werkzeug 7 zugewandt liegt.

Der Boden 32 des Lauftellers 30 weist eine in Richtung zur Topföffnung 31 eingeprägte Vertiefung 33 auf, in der das freie Ende 16 der Abtriebswelle 11 endet. Die Vertiefung 33 im Boden 32 des Lauftellers 30 ist derart ausgebildet, dass das Ende 16 der Abtriebswelle 11 vor der Tellerebene 34 des Lauftellers 30 endet. Der Laufteller 30 steht axial in Richtung zum Untergrund 28 über das Ende 16 bzw. das Spannmittel 50 über. Das an dem Ende 16 angeordnete Spannmittel 50 liegt innerhalb der Vertiefung 33, so dass sowohl das Ende 16 der Abtriebswelle 11 als auch das Spannmittel vor einem Kontakt mit dem Untergrund 29 geschützt ist.

Die Tellerebene 34 des Lauftellers 30 ist durch die Ringfläche 35 des Bodens 32 bestimmt, die sich aufgrund der Vertiefung 33 im Boden 32 des Lauftellers 30 ausbildet. Im Zentrum der Vertiefung 33 ist eine Montageöffnung 36 ausgebildet, die von einem umlaufenden Befestigungsrand 37 begrenzt ist.

Die im Ausführungsbeispiel mit der Antriebswelle 10 verbundene Abtriebswelle 11 weist eine Stufe 17 auf, die durch das im Durchmesser reduzierte Ende 16 der Abtriebswelle 11 gebildet ist. Zwischen der Stufe 17 und dem Ende 16 ist im Ausführungsbeispiel ein Außengewinde 41 zum Aufschrauben eines Spannmittels 40 ausgebildet. Im gezeigten Ausführungsbeispiel ist das Spannmittel 40 eine Spannmutter 42, kann aber auch eine Spannschraube o. dgl. sein, die in ein in der Abtriebswelle eingebrachtes Innengewinde eingeschraubt wird. Im gezeigten Ausführungsbeispiel ist das Spannmittel 40 als Spannmutter 42 ausgebildet, vorzugsweise als selbsthemmende Mutter mit einem Sicherungsring 43 (Fig. 2) ausgebildet. Der Sicherungsring 43 besteht bevorzugt aus Kunststoff, in den sich das Außengewinde 41 einschneidet.

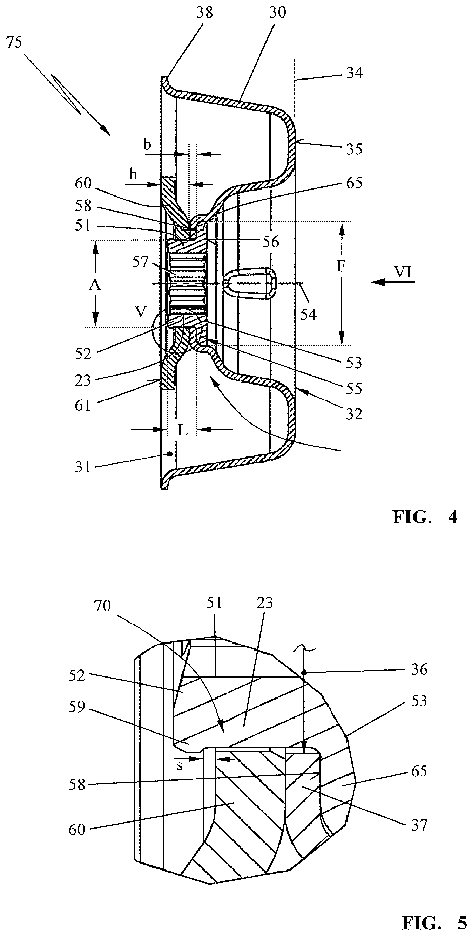

Die Spannmutter 42 wirkt auf ein Spannelement 50, welches im gezeigten Ausführungsbeispiel als Verbindungsnabe 51 ausgebildet ist. Die Längsachse 54 (Fig. 4) der Verbindungsnabe 51 liegt gleichachsig zur Drehachse 9 der Antriebswelle 10. Die Verbindungsnabe 51 weist - bezogen auf den Auflageteller 6 - ein proximales Ende 52 und ein distales Ende 53 auf.

Im Ausführungsbeispiel nach den Figuren 1 bis 7 ist an dem distalen Ende 53 der Verbindungsnabe 51 eine Verdickung 55 angeformt, die - wie Fig. 4 zeigt - als umlaufender Bund ausgebildet sein kann. Die vorzugsweise als Bund ausgebildete Verdickung 55 weist eine dem Spannmittel 40 bzw. der im Ausführungsbeispiel gezeigten Spannmutter 42 zugewandte Auflagefläche 56 auf.

Es kann vorteilhaft sein, den Außendurchmesser F der Verdickung 55 gleich oder größer auszulegen als den maximalen Außendurchmesser M der Spannmutter 42.

Die Verbindungsnabe 51 weist innere Keilnuten 57 auf, die mit den Längsrippen 14 auf der Abtriebswelle 11 zusammenwirken. Die Längsrippen 14 greifen in die Keilnuten 57 ein und sichern in Umfangsrichtung der Abtriebswelle 11 eine formschlüssige, drehfeste Verbindung zwischen der Verbindungsnabe 51 und der Abtriebswelle 11.

An der der Auflagefläche 56 gegenüberliegenden Ringfläche der Verdickung 55 liegt der Befestigungsrand 37 des Lauftellers 30 an. Der Durchmesser D der Montageöffnung 36 ist größer als der Außendurchmesser A (Fig. 4) der Verbindungsnabe 51. Der Durchmesser D (Fig. 2) der Montageöffnung 36 ist zugleich kleiner als der maximale Außendurchmesser der Verbindungsnabe 51, der im gezeigten Ausführungsbeispiel nach Fig. 4 durch den Außendurchmesser F der Verdickung 55 gebildet ist.

Die über das Spannmittel 40 auf die Verbindungsnabe 51 aufgebrachte Spannkraft zum Festspannen des Werkzeugs 7 wird über eine Druckscheibe 60 auf das Werkzeug 7 aufgebracht. Die Druckscheibe 60 liegt im Ausführungsbeispiel mit einer Ringfläche 61 am Werkzeug 7 an; der Innendurchmesser der Ringfläche 61 ist größer als der Innendurchmesser I (Fig. 2) der Werkzeugöffnung 21. Die Anlage der Druckscheibe 60 kann auch nicht kreisförmig sein, z.B. kann eine punktförmige Anlage an mehreren Stellen vorteilhaft sein, die auf einem gemeinsamen Durchmesserkreis liegen können.

Die Druckscheibe 60, der Laufteller 30 und das als Verbindungsnabe 51 ausgebildete Spannelement 50 werden von der Abtriebswelle 11 durchragt. Auf dem aus dem distalen Ende 53 der Verbindungsnabe 51 hervorstehenden Ende 16 der Abtriebswelle 11 ist das Spannmittel 40 festgelegt, im Ausführungsbeispiel die Spannmutter 42 aufgeschraubt.

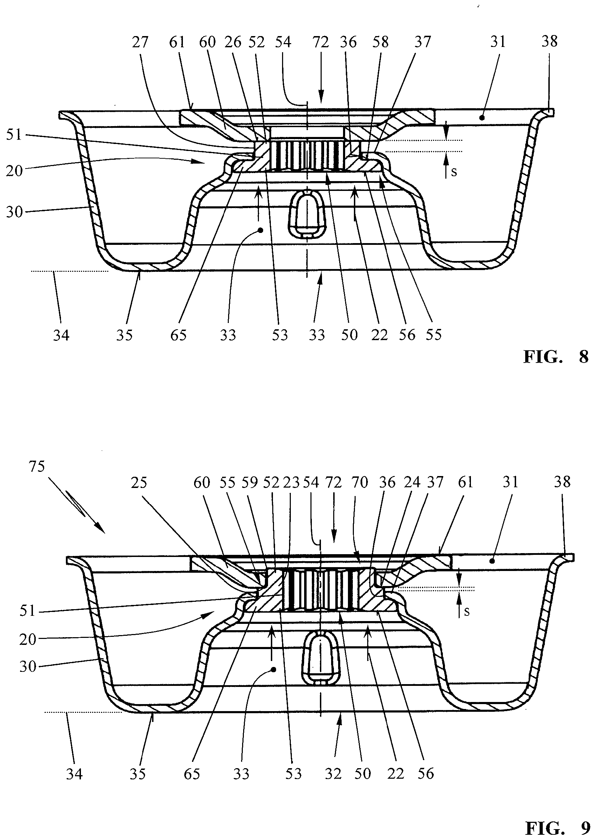

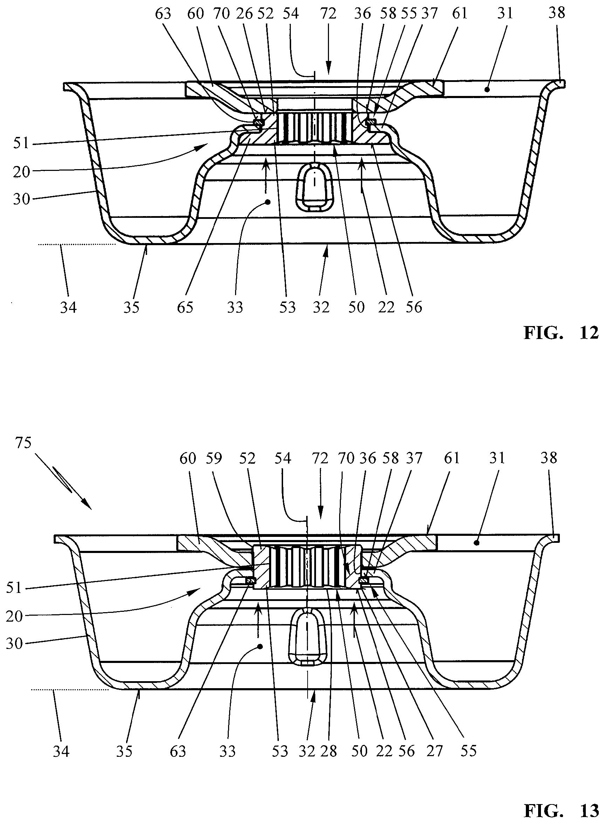

Der Laufteller 30 ist auf der Verbindungsnabe 51 vorzugsweise drehbar gehalten; in allen gezeigten Ausführungsbeispielen außer denen der Figuren 8 und 12 ist die Druckscheibe 60 auf der Verbindungsnabe 51 gehalten. Die Verbindungsnabe 51 durchragt mit ihrem proximalen Ende 52 die Druckscheibe 60 oder ist - wie Fig. 14 zeigt - einteilig mit der Druckscheibe 60 ausgebildet. Die Verbindungsnabe 51 endet mit einem Abstand z vor dem Auflageteller 6.

Der Befestigungsrand 37 der Montageöffnung 36 des Lauftellers 30 liegt im Ausführungsbeispiel zwischen der Verdickung 55 und der Druckscheibe 60. Die auf die Auflagefläche 56 der Verbindungsnabe 51 aufgebrachte axiale Spannkraft wird im Ausführungsbeispiel nach den Figuren 1 bis 7 über eine als Bund 65 ausgebildete Verdickung 55, dessen Ringfläche als Kraftübertragungsfläche 58 und den Befestigungsrand 37 unmittelbar in die Druckscheibe 60 eingeleitet, die die Spannkraft über ihre Ringfläche 61 auf das Werkzeug 7 überträgt. Das Werkzeug 7 ist zwischen dem Auflageteller 6 bzw. der Abdeckscheibe 8 und der Druckscheibe 60 zumindest reibschlüssig gehalten, so dass bei einer Rotation der Abtriebswelle 11 in Antriebsrichtung 19 das Werkzeug 7 drehend mitgenommen wird.

Kommt es bei einer Rotation des Werkzeugs 7 um die Drehachse 9 der Abtriebswelle 11 zu einem Kontakt zwischen dem Laufteller 30 und einem Untergrund 29, so kann der Laufteller 30 relativ zur formschlüssig auf der Abtriebswelle 11 festliegenden Verbindungsnabe 51 drehen. Diese Relativdrehung des Lauftellers 30 zur Verbindungsnabe 51 hat keine Auswirkungen auf das Spannmittel 40 bzw. die Spannmutter 42. Ein Lösen des Spannmittels 40 bzw. der Spannmutter 42 ist sicher vermieden.

Wie insbesondere das vergrößerte Detail V in der Darstellung gemäß Fig. 5 zeigt, sind der Laufteller 30 und die Druckscheibe 60 gemeinsam auf der Verbindungsnabe 51 gehalten. Eine Verliersicherung 70 gewährleistet, dass der Laufteller 30 verliersicher auf der Verbindungsnabe 51 gehalten ist. Die Verliersicherung 70 stellt auch sicher, dass die Druckscheibe 60 verliersicher an der Verbindungsnabe 51 angeordnet ist.

Wie Fig. 5 ferner zeigt, ist die Verliersicherung 70 an dem distalen Ende 53 der Verbindungsnabe 51 durch die vorzugsweise als Bund 65 ausgebildete Verdickung 55 gebildet, während die Verliersicherung 70 an dem proximalen Ende 52 der Verbindungsnabe 51 durch eine weitere Verdickung 59 der Verbindungsnabe 51 geringerer radialer Ausdehnung gestaltet ist. Die Verdickung 59 kann partiell oder als umlaufender Bund 65 ausgebildet sein, der vor oder während der Montage an die Verbindungsnabe 51 geformt wird. Die zentrale Öffnung der Druckscheibe 60 hat vorteilhaft einen geringfügig kleineren Durchmesser als die Verbindungsnabe 51 an der Verdickung 59. Die Druckscheibe 60 lässt sich bei der Montage elastisch über die vorhandene Verdickung 59 der Verbindungsnabe 51 pressen. Dadurch kann der bereits über die Verdickung 59 gefädelte Laufteller 30 trotz seines größeren Montagedurchmessers mittelbar durch die Druckscheibe 60 an der Verdickung 59 gesichert werden.

Fig. 5 zeigt auch, dass der Laufteller 30 und/oder die Druckscheibe 60 mit axialem Spiel s auf der Verbindungsnabe 51 gehalten sind.

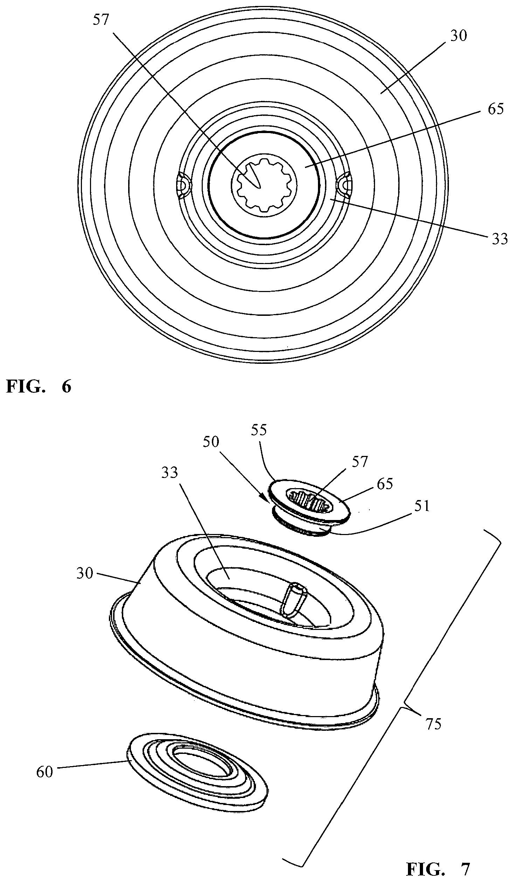

In besonderer Ausgestaltung der Erfindung bilden die Verbindungsnabe 51, der Laufteller 30 und die Druckscheibe 60 eine gemeinsame, zusammenhängende Baugruppe 75. Diese Baugruppe 75 ist in Fig. 7 in Explosionsdarstellung in ihren Einzelteilen wiedergegeben.

Fig. 6 zeigt die Draufsicht auf die Baugruppe 75 mit der Auflagefläche 56 für das Spannmittel 50 und den inneren Keilnuten 57 zur drehfesten Verbindung der Verbindungsnabe 51 mit der Abtriebswelle 11.

Wie insbesondere Fig. 4 zeigt, durchragt die Verbindungsnabe 51 die Montageöffnung 36 des Lauftellers 30 und die Druckscheibe 60, wobei ein Axialabschnitt 23 der Verbindungsnabe 51 eine Länge L aufweist, die mindestens die Höhe b des Befestigungsrandes 37 des Lauftellers 30 und maximal die Höhe b des Befestigungsrandes 37 summiert mit der axialen Höhe h der Druckscheibe 60 aufweist.

Die Bemessungen sind auf den ungespannten Zustand der Baugruppe 75 abgestellt; für einen gespannten Zustand der Baugruppe 75 ist die maximale Länge L des Axialabschnittes 23 durch die Höhe des Befestigungsrandes 37 und die minimale Höhe h der Druckscheibe 60 im gespannten Zustand beschrieben.

In besonderer Gestaltung der Erfindung ist die Vorrichtung zur Befestigung eines Werkzeugs 7 als Baugruppe 75 aus der Verbindungsnabe 51, dem Laufteller 30 und der Druckscheibe 60 gebildet, wobei die Baugruppe 75 zur Verwendung in der beschriebenen Vorrichtung 20 zur Befestigung des Werkzeugs 7 an einer von der Antriebswelle 10 angetriebenen Abtriebswelle 11 eines motorisch angetriebenen Arbeitsgerätes dient. Die Verbindungsnabe 51, der Laufteller 30 und die Druckscheibe 60 bilden eine zusammenhängende, gemeinsame Baugruppe mit einer zentralen Öffnung 72 zur Aufnahme der Abtriebswelle 11. Dabei weist die Verbindungsnabe 51 Drehmitnehmer - vorzugsweise in Form von Keilnuten 57 - zum formschlüssigen Dreheingriff mit der Abtriebswelle 11 auf, während der Laufteller 30 mit seiner Montageöffnung 36 drehbar auf der Verbindungsnabe 51 gehalten ist.

Die nachstehend beschriebenen weiteren Ausführungsbeispiele entsprechen im Grundaufbau dem Ausführungsbeispiel nach den Fig. 1 bis 7, weshalb für gleiche Teile gleiche Bezugszeichen verwendet sind. Der Laufteller 30 ist bei allen Ausführungsbeispielen zwischen einer Verdickung 55, 59 der Verbindungnabe 51und der Druckscheibe 60 angeordnet. Die Verdickung 55, 59 kann partiell oder umlaufend ausgebildet sein. Als Verdickung 55, 59 kann z.B. ein Bund 65 ausgebildet, ein Sicherungsring wie z.B. ein Sprengring angeordnet, ein Absatz oder eine Stufe ausgebildet oder dergleichen Element vorgesehen sein.

Die zum Ausführungsbeispiel nach den Fig. 1 bis 7 genannten konstruktiven Details, Vorteile und besonderen Merkmale sind auch mit den weiteren Ausführungsbeispielen ausführbar. Gleiches gilt für die am Beispiel der weiteren Ausführungsbeispiele genannten konstruktiven Gestaltungen, Vorteile und Merkmale, die ohne Einschränkung auch im Ausführungseispiel nach Fig. 1 oder den anderen Ausführungsbeispielen genutzt werden können. Die in den unterschiedlichen Ausführungsbeispielen gezeigten konstruktiven Merkmale sind in beliebiger Form miteinander kombinierbar.

So zeigt das Ausführungsbeispiel nach Fig. 8 eine Baugruppe 75, bei der die Druckscheibe 60 an das proximale Ende 52 der Verbindungsnabe 51 anschließt. Die Verbindungsnabe 51 wirkt am proximalen Ende 52 mit einer axialen Stirnseite 26 auf die Druckscheibe 60. Es kann zweckmäßig sein, die Druckscheibe 60 mit der Verbindungsnabe 51 zu verbinden, um so eine gemeinsame, zusammenhängende Baugruppe 75 zu bilden, bei der die Elemente unverlierbar zusammenhängen.

Die Druckscheibe 60 kann mit oder ohne Formschluss auf die Abtriebswelle 11 aufgefädelt werden. Nach dem Aufsetzen der Verbindungsnabe 51 auf die Abtriebswelle 11 wird die in Pfeilrichtung 22 an der Verdickung 55 aufgebrachte Spannkraft über das proximale Ende 52 und dessen Stirnseite 26 auf die Druckscheibe 60 übertragen. Bei der gezeigten Ausführungsform nach Fig. 8 liegt der Laufteller 30 mit einem axialen Abstand s auf dem Umfang 27 der Verbindungsnabe 51. Der Abstand s stellt im demontierten Zustand der Vorrichtung ein gleich großes Axialspiel dar. Beim Montieren der Vorrichtung 20 an der Abtriebswelle 11 bleibt in diesem Ausführungsbeispiel der Abstand s konstant. Auch im endmontierten Zustand, also nach dem Aufbringen der zur reibschlüssigen Fixierung des Werkzeugs 7 auf dem Auflageteller 6 aufgebrachten Spannkraft, bleibt der axiale Abstand s erhalten; der Laufteller 30 stützt sich mit seinem die Topföffnung 31 begrenzenden Umfangsrand 38 am Werkzeug 7 und mit dem Befestigungsrand 37 der Montageöffnung 36 an der Verdickung 55 ab. Der Laufteller 30 weist vorteilhaft in endmontierter Stellung am Werkzeugkopf 1 trotz des axialen Abstands s kein Spiel mehr auf; er ist insbesondere axial spielfrei am Werkzeugkopf 1 verspannt. Der Laufteller 30 kann relativ zur Verbindungsnabe 51 auf deren Außenumfang 27 drehen. Je nachdem, wie stark der Laufteller 30 axial am Werkzeugkopf 1 verspannt ist, kann ein geringes Drehmoment zur Überwindung des Reibschlusses erforderlich sein. Eine Drehbewegung des Lauftellers 30 gegenüber der Verbindungsnabe 51 bzw. der Abtriebswelle 11 kann z. B. dann auftreten, wenn die Ringfläche 35 des Lauftellers 30 mit dem Untergrund 29 (Fig. 1, 2) in Kontakt kommt.

Im Ausführungsbeispiel nach Fig. 9 durchragt die Verbindungsnabe 51 die Druckscheibe 60, wobei die Druckscheibe 60 an einer Ringschulter 25 des Axialabschnittes 23 der Verbindungsnabe 51 anliegt. Die Spannkraft wird gemäß Pfeilrichtung 22 in Fig. 9 am distalen Ende 53 der Verbindungsnabe 51 aufgebracht und über die Ringfläche 24 der Ringschulter 25 auf die Druckscheibe 60 übertragen. Eine Verliersicherung 70 ist nicht zwingend vorgesehen.

Der Laufteller 30 ist mit seinem Befestigungsrand 37 mit axialem Abstand s zur Druckscheibe auf der Verbindungsnabe 51 gehalten. Es kann am proximalen Ende 52 der Verbindungsnabe 51 eine Verdickung 59 gemäß dem ersten Ausführungsbeispiel (Fig. 4) vorgesehen sein, so dass die Verliersicherung 70 für die Druckscheibe 60 durch die Ringschulter 25 und die Verdickung 59 am proximalen Ende 52 der Verbindungsnabe 51 gebildet wird. Die Verliersicherung 70 für den Laufteller 30 ist durch die Verdickung 55 und die vorzugsweise auf der Verbindungsnabe 51 gesicherte Druckscheibe 60 gebildet; der Befestigungsrand 37 der Montageöffnung 36 des Lauftellers 30 hat axiales Spiel s zwischen der Druckscheibe 60 und der Verdickung 55.

Im Ausführungsbeispiel nach Fig. 9 bildet die Verbindungsnabe 51, der Laufteller 30 und die Druckscheibe 60 eine gemeinsame Baugruppe 75, die über ihre zentrale Öffnung 72 auf die Abtriebswelle 11 aufgefädelt und mittels einem Spannmittel 40, vorzugsweise einer Spannmutter 42, festgelegt wird.

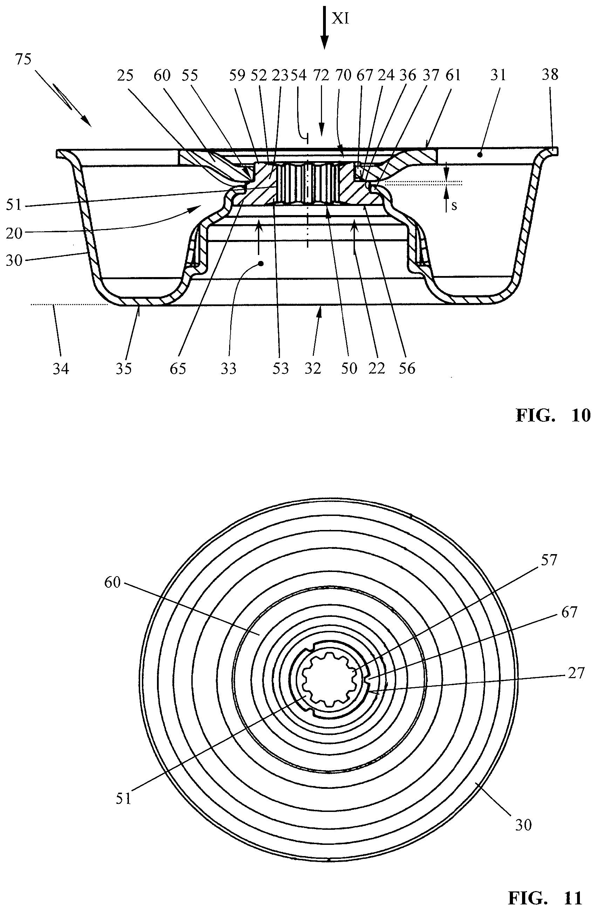

Im Ausführungsbeispiel nach den Figuren 10 und 11 greift die Druckscheibe 60 über Drehmitnehmer 67 in den Außenumfang 27 (Fig. 11) der Verbindungsnabe 51 ein, wodurch die Druckscheibe 60 drehfest auf der Verbindungsnabe 51 gehalten ist. Ist die Druckscheibe 60 drehfest auf der Verbindungsnabe 51 gehalten, kann das Durchrutschmoment des Werkzeugs 7 erhöht werden, da eine Drehmomentübertragung durch Reibschluss auf beiden Flachseiten des Werkzeugs 7 gegeben ist.

Das Ausführungsbeispiel nach Fig. 12 entspricht im Grundaufbau dem nach Fig. 8; im Gegensatz zum zweiten Ausführungsbeispiel ist der Laufteller 30 verliersicher auf der Verbindungsnabe 30 gehalten. Die Verliersicherung 70 in Richtung zum proximalen Ende 52 erfolgt über einen Sprengring 63. Je nach axialer Position des Sprengrings 63 kann das im vorhergehend beschriebenen Ausführungsbeispiel dargestellte axiale Spiel s des Lauftellers 30 durch den Sprengring 63 reduziert sein. Bei einer Anordnung, in der der Laufteller 30 im endmontierten Zustand nicht am Werkzeug 7 anliegt, ist dadurch dennoch eine definierte Lage des Lauftellers 30 sichergestellt. Der Sprengring 63 hält den Befestigungsrand 37 der Montageöffnung 36 des Lauftellers 30 im Wesentlichen spielfrei, insbesondere spielfrei, aber drehbar zwischen der Verdickung 55 der Verbindungsnabe 51 und dem Sprengring 63. Die Druckscheibe 60 ist auf der Stirnseite 26 des proximalen Endes 52 der Verbindungsnabe 51 vorgesehen. Zweckmäßig liegt die Stirnseite 26 der Verbindungsnabe 51auf der Druckscheibe 60 lösbar an.

Im Ausführungsbeispiel nach Fig. 13 ist die Verbindungsnabe 51 als rein zylindrischer Grundkörper ausgeführt. Die Stirnfläche 28 des distalen Endes 53 dient als Auflage für ein Spannmittel 40, insbesondere eine Spannmutter 42. Die Spannkraft wird über den Sprengring 63 und den Befestigungsrand 37 auf die Druckscheibe 60 übertragen.

Das Ausführungsbeispiel nach Fig. 13 entspricht in seinem grundsätzlichen Aufbau dem ersten Ausführungsbeispiel (Fig. 4). Anstelle einer am Grundkörper der Verbindungsnabe 51 angeformten Verdickung 55 in der Gestalt eines Bundes kann zur axialen Sicherung des Lauftellers 30 die Verdickung 55 auch durch ein separates Element, beispielsweise einen Sprengring 63 gebildet sein. Über das separate Element kann gleichzeitig die auf der Verbindungsnabe 51 angeordnete Druckscheibe 60 gesichert sein, so dass die Spannkraft über das separate Element, nämlich den Sprengring 63, und den Befestigungsrand 37 des Lauftellers 30 auf die Druckscheibe 60 übertragen wird. Das Spannmittel 50 liegt in diesem Ausführungsbeispiel nach Fig. 13 axial ausschließlich auf dem Grundkörper der Verbindungsnabe 51 an. Der maximale Durchmesser des Spannmittels 50 kann größer als der Durchmesser des Grundkörpers an der Auflagestelle sein. Das Spannmittel 50 steht radial über den Außenumfang der Verbindungsnabe 51 über.

Es kann vorteilhaft sein, die Druckscheibe 60 getrennt von dem Laufteller 30 axial abzustützen. Wie beispielsweise in Fig. 9 gezeigt, kann eine Ringschulter 25 an der Verbindungsnabe 51 ausgebildet sein. Auf diese Weise erfolgt der Kraftfluss vom Spannmittel 50 zur Druckscheibe 60 am Laufteller 30 vorbei. Das Sicherungsmittel für den Laufteller 30 ist frei von Spannkräften und kann schwächer dimensioniert werden. Weiterhin wird bei Fixierung der Vorrichtung 20 an der Abtriebswelle 11 der Laufteller 30 nicht oder weniger stark axial verspannt, als bei einer unmittelbaren Abstützung der Druckscheibe 60 am Laufteller 30.

Der Laufteller ist sowohl bei an der Abtriebswelle 11 montierter als auch demontierter Vorrichtung 20 gegenüber der Verbindungsnabe 51 drehbar. Der Laufteller 30 kann frei drehbar sein, oder erst ab einem Rutschmoment drehbar sein. Das zur Drehung des Lauftellers 30 benötigte Rutschmoment ist kleiner als das zu einem Durchrutschen des Werkzeugs 7 gegenüber dem Auflageteller 6 erforderliche Rutschmoment.

## Patentansprüche

1. Anordnung
- umfassend eine Abtriebswelle (11) eines motorisch angetriebenen Arbeitsgerätes,
- umfassend einen Auflageteller (6) für ein Werkzeug (7),
- umfassend einen Laufteller (30), ein Spannelement (50) und ein Spannmittel (40),
wobei die Abtriebswelle (11) den Auflageteller (6), das Werkzeug (7), einen Laufteller (30) und ein Spannelement (50) durchragt, und die Abtriebswelle (11) ein Spannmittel (40) trägt, wobei das Spannmittel (40) über das Spannelement (50) das Werkzeug (7) auf dem Auflageteller (6) fixiert,
- wobei das Spannelement (50) als Verbindungsnabe (51) ausgebildet ist,
- der Laufteller (30) gegenüber der Verbindungsnabe (51) drehbar ist,
- die Verbindungsnabe (51) von der Abtriebswelle (11) durchragt ist, und
- die Verbindungsnabe (51) auf der Abtriebswelle (11) drehfest gehalten ist, **dadurch gekennzeichnet,**
- **dass** der Laufteller (30) auf der Verbindungsnabe (51) gehalten ist,
- und **dass** das Spannmittel (40) auf eine Auflagefläche (56) der Verbindungsnabe (51) wirkt.

2. Anordnung nach Anspruch 1,
**dadurch gekennzeichnet, dass** die Verbindungsnabe (51) auf eine Druckscheibe (60) wirkt, dass die Druckscheibe (60) zur Anlage an dem Werkzeug (7) ausgebildet ist und dass die Druckscheibe (60) von der Abtriebswelle (11) durchragt ist.

3. Anordnung nach Anspruch 1,
**dadurch gekennzeichnet, dass** der Laufteller (30) eine Montageöffnung (36) mit einem Befestigungsrand (37) aufweist und die Verbindungsnabe (51) die Montageöffnung (36) des Lauftellers (30) durchragt.

4. Anordnung nach Anspruch 3,
**dadurch gekennzeichnet, dass** der Laufteller (30) mit axialem Spiel (s) an der Verbindungsnabe (51) gehalten ist.

5. Anordnung nach Anspruch 3,
**dadurch gekennzeichnet, dass** der Befestigungsrand (37) der Montageöffnung (36) des Lauftellers (30) axial zwischen einem Ende (53) der Verbindungsnabe (51) und der Druckscheibe (60) angeordnet ist.

6. Anordnung nach Anspruch 1,
**dadurch gekennzeichnet, dass** an der Verbindungsnabe (51) eine Verliersicherung (70) ausgebildet ist, die den Laufteller (30) verliersicher auf der Verbindungsnabe (51) hält.

7. Anordnung nach Anspruch 2,
**dadurch gekennzeichnet, dass** die Druckscheibe (60) verliersicher an der Verbindungsnabe (51) angeordnet ist.

8. Anordnung nach Anspruch 2,
**dadurch gekennzeichnet, dass** der Laufteller (30) und die Druckscheibe (60) gemeinsam auf der Verbindungsnabe (51) gehalten sind.

9. Anordnung nach Anspruch 8,
**dadurch gekennzeichnet, dass** die Verbindungsnabe (51), der Laufteller (30) und die Druckscheibe (60) eine gemeinsame, zusammenhängende Baugruppe (75) bilden.

10. Anordnung nach einem der Ansprüche 1 bis 9,
**dadurch gekennzeichnet, dass** die Verbindungsnabe (51) eine Verdickung (55, 59) aufweist.

11. Anordnung nach Anspruch 10,
**dadurch gekennzeichnet, dass** die an der Verbindungsnabe (51) ausgebildete Verdickung (55) eine Auflagefläche (56) für das Spannmittel (40) bildet.

12. Anordnung nach Anspruch 10 oder 11,
**dadurch gekennzeichnet, dass** die an der Verbindungsnabe (51) ausgebildete Verdickung (55, 59) Teil einer Verliersicherung (70) ist, und die Verdickung (55) mit einer Kraftübertragungsfläche (58) auf die Druckscheibe (60) wirkt.

13. Anordnung nach einem der Ansprüche 1 bis 12,
**dadurch gekennzeichnet, dass** bezogen auf den Auflageteller (6) die Verbindungsnabe (51) ein proximales Ende (52) und ein distales Ende (53) aufweist, und das proximale Ende (52) der Verbindungsnabe (5) einen Abstand (z) zum Auflageteller (6) besitzt.

14. Anordnung nach Anspruch 2,
**dadurch gekennzeichnet, dass** die Druckscheibe (60) und die Verbindungsnabe (51) zueinander drehfest angeordnet sind.

15. Anordnung nach Anspruch 14,
**dadurch gekennzeichnet, dass** die Druckscheibe (60) und die Verbindungsnabe (51) einteilig miteinander ausgebildet sind.

16. Anordnung nach Anspruch 2 und 3,
**dadurch gekennzeichnet, dass** die Verbindungsnabe (51) die Montageöffnung (36) mit einem Axialabschnitt (23) durchragt, wobei der Axialabschnitt (23) eine Länge (L) aufweist, die mindestens der Höhe (b) des Befestigungsrands (37) des Lauftellers (30) und maximal der Höhe (b) des Befestigungsrandes (37) summiert mit der axialen Höhe (h) der Druckscheibe (60) entspricht.

## Claims

1. Arrangement
- comprising an output shaft (11) of a motor-driven working device,
- comprising a support plate (6) for a tool (7),
- comprising a running plate (30), a clamping element (50) and a clamping means (40),
wherein the output shaft (11) passes through the support plate (6), the tool (7), a running plate (30) and a clamping element (50), and the output shaft (11) carries a clamping means (40), wherein the clamping means (40) fixes the tool (7) on the support plate (6) via the clamping element (50),
- wherein the clamping element (50) is designed as a connection hub (51),
- the running plate (30) is rotatable relative to the connection hub (51),
- the connection hub (51) is passed through by the output shaft (11), and
- the connection hub (51) is held rotationally fixed on the output shaft (11), **characterized in**
- **that** the running plate (30) is held on the connection hub (51),
- and **that** the clamping means (40) acts on a bearing surface (56) of the connection hub (51).

2. Arrangement according to claim 1,
**characterized in that** the connection hub (51) acts on a pressure disc (60), that the pressure disc (60) is designed for bearing against the tool (7) and that the pressure disc (60) is passed through by the ouput shaft (11).

3. Arrangement according to claim 1,
**characterized in that** the running plate (30) has a mounting opening (36) with a fastening edge (37) and the connection hub (51) passes through the mounting opening (36) of the running plate (30).

4. Arrangement according to claim 3,
**characterized in that** the running plate (30) is held on the connection hub (51) with axial play (s).

5. Arrangement according to claim 3,
**characterized in that** the fastening edge (37) of the mounting opening (36) of the running plate (30) is arranged axially between an end (53) of the connection hub (51) and the pressure disc (60).

6. Arrangement according to claim 1,
**characterized in that** a captive securing (70) is formed on the connection hub (51), which holds the running plate (30) captively on the connection hub (51).

7. Arrangement according to claim 2,
**characterized in that** the pressure disc (60) is arranged captively on the connection hub (51).

8. Arrangement according to claim 2,
**characterized in that** the running plate (30) and the pressure disc (60) are held together on the connection hub (51).

9. Arrangement according to claim 8,
**characterized in that** the connection hub (51), the running plate (30) and the pressure disc (60) form a common, coherent assembly (75).

10. Arrangement according to one of claims 1 to 9,
**characterized in that** the connection hub (51) has a thickening (55, 59).

11. Arrangement according to claim 10,
**characterized in that** the thickening (55) formed on the connection hub (51) forms a bearing surface (56) for the clamping means (40).

12. Arrangement according to claim 10 or 11,
**characterized in that** the thickening (55, 59) formed on the connection hub (51) is part of a captive securing (70), and the thickening (55) acts on the pressure disc (60) with a force transmission surface (58).

13. Arrangement according to one of claims 1 to 12,
**characterized in that**, with reference to the support plate (6), the connection hub (51) has a proximal end (52) and a distal end (53), and the proximal end (52) of the connection hub (5) has a distance (z) to the support plate (6).

14. Arrangement according to claim 2,
**characterized in that** the pressure disc (60) and the connection hub (51) are arranged rotationally fixed to each other.

15. Arrangement according to claim 14,
**characterized in that** the pressure disc (60) and the connection hub (51) are formed in one piece with each other.

16. Arrangement according to claims 2 and 3,
**characterized in that** the connection hub (51) passes through the mounting opening (36) with an axial section (23), wherein the axial section (23) has a length (L) which corresponds at least to the height (b) of the fastening edge (37) of the running plate (30) and at most to the height (b) of the fastening edge (37) summed with the axial height (h) of the pressure disc (60).

## Revendications

1. Agencement
- comprenant un arbre de sortie (11) d'un appareil de travail entraîné par moteur,
- comprenant un plateau de support (6) pour un outil (7),
- comprenant un plateau de roulement (30), un élément de serrage (50) et un moyen de serrage (40),
l'arbre de sortie (11) traversant le plateau de support (6), l'outil (7), un plateau de roulement (30) et un élément de serrage (50), et l'arbre de sortie (11) portant un moyen de serrage (40), le moyen de serrage (40) fixant, via l'élément de serrage (50), l'outil (7) sur le plateau de support (6),
- où l'élément de serrage (50) est configuré comme moyeu de liaison (51),
- où le plateau de roulement (30) est monté rotatif par rapport au moyeu de liaison (51),
- où le moyeu de liaison (51) est traversé par l'arbre de sortie (11), et
- où le moyeu de liaison (51) est maintenu solidaire en rotation sur l'arbre de sortie (11),
**caractérisé en ce que**
- le plateau de roulement (30) est maintenu sur le moyeu de liaison (51),
- et **en ce que** le moyen de serrage (40) agit sur une surface d'appui (56) du moyeu de liaison (51).

2. Agencement selon la revendication 1,
**caractérisé en ce que** le moyeu de liaison (51) agit sur une rondelle de pression (60), **en ce que** la rondelle de pression (60) est configurée pour venir en appui contre l'outil (7) et **en ce que** la rondelle de pression (60) est traversée par l'arbre de sortie (11).

3. Agencement selon la revendication 1,
**caractérisé en ce que** le plateau de roulement (30) présente une ouverture de montage (36) avec un bord de fixation (37) et **en ce que** le moyeu de liaison (51) traverse l'ouverture de montage (36) du plateau de roulement (30).

4. Agencement selon la revendication 3,
**caractérisé en ce que** le plateau de roulement (30) est maintenu avec un jeu axial (s) sur le moyeu de liaison (51).

5. Agencement selon la revendication 3,
**caractérisé en ce que** le bord de fixation (37) de l'ouverture de montage (36) du plateau de roulement (30) est disposé axialement entre une extrémité (53) du moyeu de liaison (51) et la rondelle de pression (60).

6. Agencement selon la revendication 1,
**caractérisé en ce qu'une** sécurisation contre la perte (70) est formée sur le moyeu de liaison (51), qui maintient le plateau de roulement (30) de manière sécurisée contre la perte sur le moyeu de liaison (51).

7. Agencement selon la revendication 2,
**caractérisé en ce que** la rondelle de pression (60) est disposée de manière sécurisée contre la perte sur le moyeu de liaison (51).

8. Agencement selon la revendication 2,
**caractérisé en ce que** le plateau de roulement (30) et la rondelle de pression (60) sont maintenus ensemble sur le moyeu de liaison (51).

9. Agencement selon la revendication 8,
**caractérisé en ce que** le moyeu de liaison (51), le plateau de roulement (30) et la rondelle de pression (60) forment un ensemble constructif (75) commun et continu.

10. Agencement selon l'une quelconque des revendications 1 à 9, **caractérisé en ce que** le moyeu de liaison (51) présente un renflement (55, 59).

11. Agencement selon la revendication 10,
**caractérisé en ce que** le renflement (55) formé sur le moyeu de liaison (51) forme une surface d'appui (56) pour le moyen de serrage (40).

12. Agencement selon la revendication 10 ou 11,
**caractérisé en ce que** le renflement (55, 59) formé sur le moyeu de liaison (51) fait partie d'une sécurisation contre la perte (70), et **en ce que** le renflement (55) agit, au moyen d'une surface de transmission de force (58), sur la rondelle de pression (60).

13. Agencement selon l'une quelconque des revendications 1 à 12, **caractérisé en ce que**, par rapport au plateau de support (6), le moyeu de liaison (51) présente une extrémité proximale (52) et une extrémité distale (53), et **en ce que** l'extrémité proximale (52) du moyeu de liaison (5) présente un écartement (z) par rapport au plateau de support (6).

14. Agencement selon la revendication 2,
**caractérisé en ce que** la rondelle de pression (60) et le moyeu de liaison (51) sont disposés solidaires en rotation l'un par rapport à l'autre.

15. Agencement selon la revendication 14,
**caractérisé en ce que** la rondelle de pression (60) et le moyeu de liaison (51) sont réalisés d'une seule pièce l'un avec l'autre.

16. Agencement selon les revendications 2 et 3,
**caractérisé en ce que** le moyeu de liaison (51) traverse l'ouverture de montage (36) au moyen d'une section axiale (23), la section axiale (23) présentant une longueur (L) qui est au moins égale à la hauteur (b) du bord de fixation (37) du plateau de roulement (30) et au plus égale à la hauteur (b) du bord de fixation (37) additionnée à la hauteur axiale (h) de la rondelle de pression (60).
